# FASCICULE DE BREVET EUROPEEN

(11) **EP 1 893 064 B1**
(45) Date de publication et mention de la délivrance du brevet: **19.11.2008**
(21) Numéro de dépôt: 06755421.2
(22) Date de dépôt: 13.04.2006
(51) Int. Cl.: A47J 31/40, A47J 31/58

(54) **MACHINE POUR PREPARER UNE INFUSION COMPRENANT UN DISPOSITIF DE VERROUILLAGE D'UNE CHAMBRE D'INFUSION**
AUFGUSSMASCHINE MIT EINEM ELEMENT ZUM VERRIEGELN DER AUFGUSSKAMMER
INFUSION MACHINE COMPRISING AN INFUSION CHAMBER LOCKING ELEMENT

(30) Priorité: 04.05.2005 FR 0504580
(43) Date de publication de la demande: 05.03.2008
(73) Titulaire: SEB S.A., 69130 Ecully (FR)
(72) Inventeur: HIRON, Frédéric, 72130 Asse le Boisne (FR)
(74) Mandataire: Kiehl, Hubert
(86) Numéro de dépôt international: PCT/FR2006/000856
(87) Numéro de publication internationale: WO 2006/120313

(56) Documents cités:
- EP-A- 0 904 718
- EP-A- 1 522 244
- FR-A- 2 842 091
- FR-A- 2 855 733
- US-A- 5 794 519

## Description

La présente invention se rapporte à une machine pour préparer une infusion équipée d'un dispositif de verrouillage d'une chambre d'infusion. Plus particulièrement, l'invention se rapporte à une machine comportant :
- un boîtier comprenant au moins une première partie et une deuxième partie mobiles l'une par rapport à l'autre ;
- un générateur d'eau chaude sous pression agencé à l'intérieur du boîtier ;
- au moins une première chambre d'infusion délimitée par les première et deuxième parties du boîtier, et alimentée par ledit générateur pour infuser un produit placé à l'intérieur; et
- un dispositif de verrouillage de la chambre d'infusion comprenant une commande de verrouillage reliée à un levier de verrouillage et comprenant au moins un premier élément de verrouillage monté rotatif sur un axe, dit de verrouillage, relié à la première partie du boîtier et un deuxième élément de verrouillage fixé à la deuxième partie du boîtier, ledit premier élément de verrouillage étant adapté à être déplacé par rotation entre une position verrouillée dans laquelle lesdits premier et deuxième éléments de verrouillage sont, en prise l'un avec l'autre, et une position déverrouillée dans laquelle lesdits premier et deuxième éléments de verrouillage sont désengageables l'un de l'autre. Le document EP-1522244 décrit une machine pour préparer une infusion. Des machines de ce type ont été réalisées, notamment sous forme de machines à café comportant une chambre d'infusion adaptée pour recevoir une dose de mouture de café contenue dans un sachet souple de papier filtre. Le fait de verrouiller la chambre d'infusion par une rotation relative entre deux éléments de verrouillage autour d'un axe, et notamment d'un axe s'étendant sensiblement selon la direction de séparation des premier et deuxième éléments de verrouillage lors de l'ouverture de la chambre d'infusion, est avantageux pour éviter une ouverture de la chambre d'infusion sous l'effet de l'augmentation de la pression dans celle-ci lorsque l'infusion est préparée.

Toutefois, la chambre d'infusion doit demeurer suffisamment étanche au niveau de la jonction entre les première et deuxième parties du boîtier qui la délimitent pour éviter des fuites d'eau chaude sous pression. Pour obtenir cette étanchéité, on peut prévoir des joints élastiquement déformables et/ou des moyens de serrage entre les première et deuxième parties du boîtier lors du verrouillage. Or, il s'avère que le fait de prévoir de telles dispositions pour l'étanchéité de la chambre augmente très nettement les frottements entre le premier et le deuxième éléments de verrouillage. Il devient alors difficile d'obtenir un serrage ou une compression suffisante des joints d'étanchéité, sans que le verrouillage de la chambre d'infusion ne requiert un effort inacceptable pour certains utilisateurs pour passer de la position déverrouillée à la position verrouillée, ou inversement.

La présente invention a donc pour but de permettre un verrouillage étanche et fiable de la chambre d'infusion, tout en offrant une commande de verrouillage qui soit aisée à manipuler pour la plupart des utilisateurs.

A cet effet, la présente invention a pour objet une machine pour préparer une infusion du type précité, **caractérisée en ce que** le levier de verrouillage est monté pivotant autour d'un axe fixe par rapport à la première partie du boîtier et est relié au premier élément de verrouillage, et ledit lever de verrouillage est adapté à entraîner ledit premier élément de verrouillage en rotation autour de l'axe de verrouillage par rapport à la première partie du boîtier et à exercer sur ledit premier élément de verrouillage un couple amplifié par rapport au couple exercé sur ledit levier par la commande de verrouillage.

Grâce à l'effet d'amplification du couple, ou encore de réduction de l'amplitude du déplacement, obtenu par le pivotement du levier autour de l'axe fixe, l'effort exercé sur la commande de verrouillage reste tout à fait acceptable pour la plupart des utilisateurs. On notera que pour obtenir un verrouillage fiable avec un élément de verrouillage rotatif, l'angle de rotation de celui-ci peut être faible, par exemple inférieur à 45 degrés. Par conséquent, même si le déplacement de la commande de verrouillage est amplifié, son amplitude reste acceptable pour l'utilisateur pour obtenir un verrouillage efficace de la chambre d'infusion.

Dans des modes de réalisation préférés de l'invention, on a recours, en outre, à l'une et/ou à l'autre des dispositions suivantes :
- le levier de verrouillage comprend un bras de commande s'étendant depuis l'axe de pivotement jusqu'à une portion reliée à la commande de verrouillage, et un premier bras d'entraînement s'étendant depuis ledit axe de pivotement jusqu'à une portion qui est reliée au premier élément de verrouillage en un point excentré par rapport à l'axe de verrouillage dudit premier élément, la longueur du bras de commande étant supérieure à la longueur du bras d'entraînement ;
- l'un desdits premier et deuxième éléments de verrouillage comprend des ergots s'étendant radialement par rapport à l'axe de verrouillage, tandis que l'autre desdits premier et deuxième éléments de verrouillage comprend des guides en "L" formés dans une bague coaxiale à l'axe de verrouillage, lesdits guides présentant chacun une première portion longitudinale débouchant du côté de l'élément de verrouillage muni d'ergots, suivie d'une deuxième portion circonférentielle dans laquelle l'ergot correspondant vient en prise avec le guide ;
- les guides et les ergots présentent des surfaces de contact mutuel présentant respectivement un bossage et un creux venant en correspondance lorsque les premier et deuxième éléments de verrouillage sont en position verrouillée ;
- le levier de verrouillage présente un bras d'indexage s'étendant depuis l'axe de pivotement jusqu'à une butée d'indexation en appui contre un organe élastiquement déformable relié à la première partie du boîtier, le pivotement du levier depuis la position verrouillée ou déverrouillée entraînant une déformation de l'organe élastique à l'encontre de sa force de rappel ;
- la première partie du boîtier présente un guide le long duquel la commande de verrouillage est mobile en translation, ladite commande de verrouillage étant reliée de manière articulée au levier de verrouillage ;
- une deuxième chambre d'infusion est prévue, et le levier de verrouillage est en outre relié à un premier élément de verrouillage de la deuxième chambre, ledit levier étant adapté à entraîner simultanément en rotation les premiers éléments de verrouillage respectifs des première et. deuxième chambres autour de leurs axes de verrouillage respectifs par rapport à la première partie du boîtier ;
- le levier de verrouillage comprend un deuxième bras d'entraînement qui est relié au premier élément de verrouillage de la deuxième chambre d'infusion, et qui s'étend depuis l'axe de pivotement selon une direction colinéaire au premier bras d'entraînement, de préférence sur une même longueur, l'axe de pivotement du levier étant parallèle aux axes de verrouillage des premier et deuxième éléments de verrouillage respectifs des première et deuxième chambres d'infusion et étant situé approximativement au milieu desdits axes de verrouillage ;
- l'angle formé entre les premier et deuxième bras d'entraînement du levier d'une part, et le bras de commande dudit levier d'autre part, est déterminé en fonction des positions verrouillée et déverrouillée de la commande de verrouillage de manière à ce que lesdits premier et deuxième bras d'entraînement soient dans des positions approximativement symétriques, par rapport au plan comprenant les axes de verrouillage, entre la position verrouillée et la position déverrouillée de ladite commande de verrouillage ;
- la deuxième partie du boîtier constitue une plate-forme montée en façade du boîtier et la première partie du boîtier constitue un couvercle supérieur monté articulé sur ladite plate-forme.

D'autres caractéristiques et avantages de l'invention apparaîtront au cours de la description qui va suivre, donnée à titre d'exemple non limitatif, en référence aux dessins annexés dans lesquels :
- la figure 1 est une vue en perspective d'une machine à café réalisée selon l'invention présentant un couvercle en position fermée ;
- la figure 2 est une vue analogue à la figure 1 dans laquelle le couvercle est en position ouverte ;
- la figure 3 est une vue partielle arrachée de face de la machine représentée à la figure 1 ;
- la figure 4 est une vue partielle d'une coupe verticale selon la ligne IV-IV de la figure 1 ;
- la figure 5 est une première vue arrachée de dessus du couvercle représenté à la figure 1 ;
- la figure 6 est une deuxième vue arrachée de dessus du couvercle représenté à la figure 2.

Sur les différentes figures, on a conservé des références identiques pour désigner des éléments identiques ou similaires.

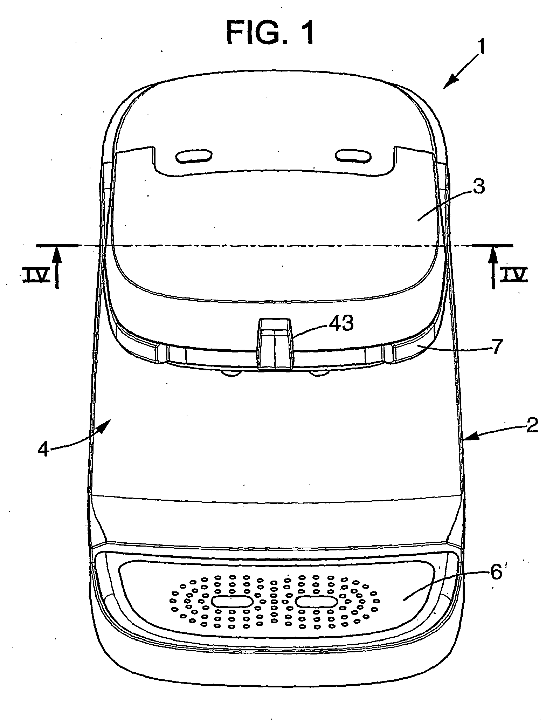

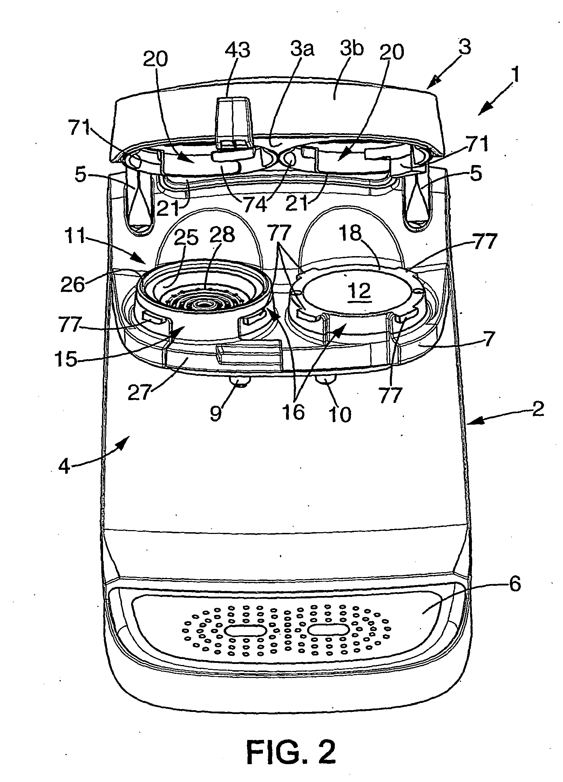

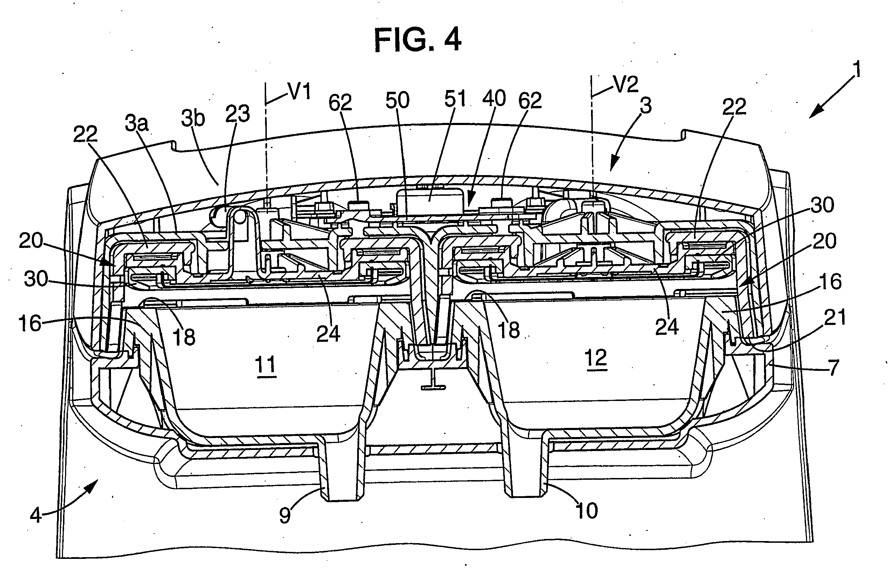

A la figure 1 est représentée une machine à café 1 présentant un boîtier 2 comprenant une première partie 3 et une deuxième partie 4. Comme cela est mieux visible à la figure 2, la première partie 3 du boîtier constitue un couvercle mobile entre une position fermée représentée à la figure 1 et une position ouverte représentée à la figure 2. Le couvercle 3 est monté articulé par l'intermédiaire de charnières 5 sur la deuxième partie 4 du boîtier qui constitue une plate-forme. Le couvercle 3 comprend principalement deux pièces en matière plastique, à savoir un châssis interne 3a visible aux figures 2 et 4, et un capot externe 3b supporté par le châssis 3a.

La plate-forme 4 renferme de manière connue un générateur d'eau chaude sous pression, ainsi que des cartes électroniques et des électrovannes permettant de commander le fonctionnement de la machine.

Le plate-forme 4, figures 1 et 2, présente un plateau repose-tasses 6 et une partie proéminente 7 de laquelle dépassent deux sorties de café (9, 10) situées à l'aplomb du plateau repose-tasses 6.

Comme cela ressort mieux de la figure 2, la partie proéminente 7 de la plate-forme 4 et le couvercle 3 délimitent une première chambre d'infusion 11 et une deuxième chambre d'infusion 12 qui sont chacune adaptées à recevoir de manière amovible un porte-filtre 15 tel que celui représenté sur la partie gauche de la figure 2.

Chacune des deux chambres d'infusion (11 ; 12) comporte une auge 16 présentant un fond muni d'un orifice à partir duquel s'étend vers le bas un élément tubulaire formant la sortie de café correspondante (9 ; 10), et une paroi annulaire s'étendant à partir du fond jusqu'à un pourtour supérieur 18. Les deux chambres d'infusion (11 ; 12) sont délimitées chacune dans leur partie supérieure, d'une part, par une bague 20 s'étendant depuis une base 21 jusqu'à un rebord 22 radialement intérieur visible sur la figure 4, et d'autre part, par une douchette 24 (figure 4). Chaque douchette 24 se présente sous forme d'un disque métallique perforé à travers lequel l'eau sous pression est amenée dans la chambre d'infusion, et d'un contre-disque en matière plastique à partir duquel s'étend un conduit d'amenée d'eau 23 prolongé par un tube souple non représenté.

Le porte-filtre 15 représenté à la figure 2 se présente sous forme d'une cuvette 25 présentant un fond muni d'une pipe de sortie adaptée à s'engager dans l'élément tubulaire formant la sortie de café 9, et une paroi annulaire qui s'étend jusqu'à une collerette 26 adaptée pour reposer sur le pourtour supérieur 18 de l'auge 16 et recevoir contre sa face supérieure la base 21 de la bague 20. Le porte-filtre 15 comporte également une poignée 27 solidaire de la cuvette 25 et un support perforé 28 destiné à recevoir un produit à infuser.

Dans le mode de réalisation représenté du porte-filtre 15, figure 2, le produit à infuser est une mouture de café non compactée contenue dans un sachet souple de papier filtre, qui est généralement appelé dosette. Toutefois, le porte-filtre peut être modifié pour recevoir une cartouche plus ou moins rigide contenant de la mouture de café compactée ou non, ou pour recevoir directement de la mouture de café. Il est également possible de prévoir des produits à infuser différents du café, comme par exemple du thé, du chocolat, du lait en poudre ou un mélange de ces produits, par exemple pour réaliser'un café au lait ou un chocolat au lait.

Comme cela est visible sur la figure 4, un joint annulaire en élastomère 30 est disposé contre le rebord 22 de la bague 20 pour venir en appui contre la collerette 26 du porte-filtre 15 lorsqu'il repose sur le pourtour supérieur .18 de l'auge 16 d'une des chambres d'infusion (11 ; 12). Ainsi, la cuvette 25 et la collerette 26 du porte-filtre 15 définissent avec le joint 30 et la douchette 24 un espace étanche dans lequel l'eau chaude sous pression est amenée à travers les perforations de la douchette par le conduit 23.

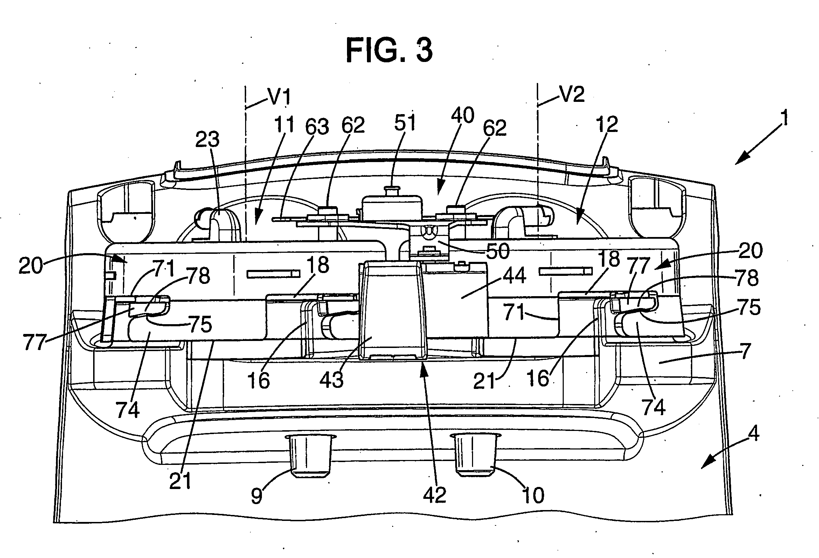

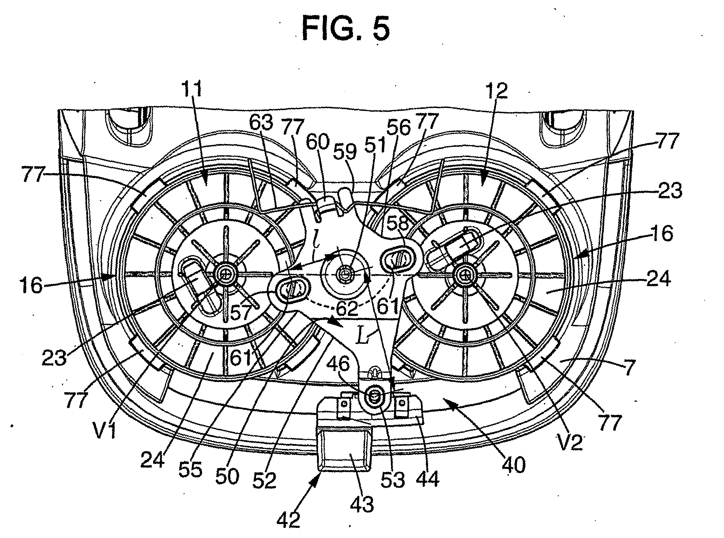

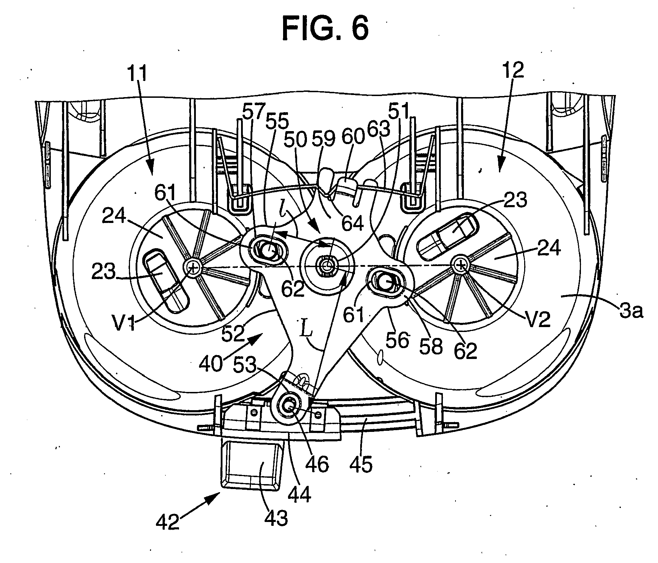

Pour maintenir les chambres d'infusion 11, 12 dans l'état étanche tel que représenté aux figures 3 et 4, la machine comprend un dispositif de verrouillage 40 qui comporte une commande de verrouillage 42 formée par un bouton 43 faisant saillie sur la portion frontale du couvercle 3. Le bouton de commande 43 est solidaire d'une plaquette 44, visible aux figures 5 et 6 sur lesquelles seul le capot 3b n'est pas représenté, qui est monté mobile en translation dans un guide linéaire 45 conformé dans le châssis 3a du couvercle 3. Le capot 3b constituant la surface extérieure du couvercle 3 vient recouvrir la plaquette 44 et le guide 45, de sorte que seul le bouton 43 reste visible.

Le dispositif de verrouillage 40 comporte aussi un levier de verrouillage 50 mieux visible aux figures 5 et 6. Le levier de verrouillage 50 est monté pivotant autour d'un axe fixe 51 solidaire du châssis 3a du couvercle 3. L'axe de pivotement 51 s'étend sensiblement verticalement lorsque le couvercle 3 est en position fermée.

Le levier de verrouillage 50 comporte un bras de commande 52 qui s'étend depuis l'axe de pivotement 51 jusqu'à une portion 53 formant une extrémité libre, un premier et un deuxième bras d'entraînement (55, 56) s'étendant depuis l'axe de pivotement 51 jusqu'à des portions (57, 58) formant respectivement l'extrémité libre de chacun des deux bras d'entraînement, et un bras d'indexage 59 s'étendant depuis l'axe de pivotement 51 jusqu'à une extrémité libre présentant une butée d'indexation 60.

Le bras de commande 52 présente, dans sa portion d'extrémité 53, un trou dans lequel est engagé un pion vertical 46 solidaire de la plaquette 44 de la commande de verrouillage 42. Ainsi, une articulation pivotante autour d'un axe parallèle à l'axe de pivotement 51, est créée entre le bras de commande 52 et la commande de verrouillage 42. Le bras de commande 52 présente une longueur efficace L correspondant à la distance séparant l'axe fixe de pivotement 51 et l'axe de l'articulation entre le levier de commande 50 et la commande de verrouillage 42.

Les deux bras d'entraînement (55, 56) du levier 50 comportent dans leur portion d'extrémité respective (57, 58) une ouverture de débattement 61 allongée selon une direction radiale par rapport à l'axe de pivotement 51. Dans chacune de ces deux ouvertures 61 est engagé un pion d'entraînement 62. Les deux pions d'entraînement 62 s'étendent chacun verticalement depuis la face supérieure du rebord 22 des deux bagues 20 délimitant respectivement les première 11 et deuxième 12 chambres d'infusion. Ainsi est créée une articulation permettant un pivotement d'axe vertical et un mouvement de coulissement entre les bras d'entraînement (55, 56) et les bagues 20 des deux chambres d'infusion (11, 12). Les bras d'entraînement (55, 56) du levier 50 présentent ainsi chacun une longueur efficace 1, correspondant à la distance entre l'axe de pivotement 51 et le pion d'entraînement associé 62, qui est nettement inférieure à la longueur efficace L du bras de commande 52 du levier 50. Dans le mode de réalisation représenté, le rapport entre la longueur 1 et la longueur L est environ de 1/2, étant donné que la longueur efficace 1 varie au cours du déplacement du levier de verrouillage 50 entre la position verrouillée représentée à la figure 5 et la position déverrouillée représentée à la figure 6.

Sur les figures 5 et 6, la butée d'indexation 60 du bras d'indexage 59 vient en appui contre un organe élastique 63 qui est formé par une tige métallique s'étendant globalement selon une direction tangente à l'arc de cercle décrit par la butée d'indexation 60 entre des positions verrouillée (figure 5) et déverrouillée (figure 6). De plus, l'organe élastique 63 présente une déformation 64 en direction de l'axe de pivotement 51 qui est situé entre le point de contact avec la butée d'indexation 60 en position verrouillée et le point de contact en position déverrouillée. Ainsi, lorsque le levier de verrouillage 50 est déplacé de la position verrouillée (figure 5) vers la position déverrouillée (figure 6), la butée d'indexation 60 entraîne une déformation supplémentaire de l'organe élastique 63 par rapport à sa forme naturelle, ce qui crée un point dur lors du déplacement de la commande de verrouillage 42.

Le dispositif de verrouillage 40 comporte également des éléments de verrouillage qui sont aptes à s'engager l'un avec l'autre, et à venir en prise par rotation relative entre ces éléments. Dans le mode de réalisation représenté, un premier et un deuxième éléments de verrouillage sont prévus pour chacune des première et deuxième chambres d'infusion (11, 12).

Le premier élément de verrouillage de la première chambre d'infusion 11 est constitué par la bague 20 qui comprend, outre le rebord 22 muni du pion d'entraînement 62, des guides en "L" 71. Comme on le voit mieux à la figure 3, les guides en "L" 71 sont formés par des ouvertures traversant la paroi de la bague 20. Les guides en "L" 71 présentent chacun une première portion qui s'étend longitudinalement de la base 21 selon l'axe de la bague 20, de sorte que cette portion des guides 71 débouche du côté de l'auge 16 correspondante. Une deuxième portion de chaque guide 71 s'étend circonférentiellement dans la paroi de la bague 20, de sorte qu'elle définit une fente délimitée entre une partie supérieure de la bague 20 et une patte 74 qui prolonge circonférentiellement la base 21 de la bague. Les guides en "L" 71 sont par exemple au nombre de quatre et sont régulièrement répartis à la périphérie de la bague 20.

La bague 20 est montée pivotante par l'intermédiaire de la douchette 24 autour d'un axe vertical V1 fixe par rapport au couvercle 3, qui correspond à l'axe de symétrie de la bague 20. Le pivotement du levier de verrouillage 50 par rapport à l'axe de pivotement 51, qui est parallèle à l'axe de verrouillage V1, entraîne donc un pivotement de la bague 20 de la première chambre 11 autour de son axe V1 du fait de la liaison entre le pion d'entraînement 62 et la portion d'extrémité 57 du premier bras d'entraînement 55.

Le deuxième élément de verrouillage de la première chambre d'infusion 11 est constitué par l'auge 16 qui comporte des ergots 77 s'étendant radialement vers l'extérieur depuis la périphérie du pourtour supérieur 18. Comme cela est visible sur la figure 5 sur laquelle le châssis 3a, le capot 3b et les bagues 20 ne sont pas représentés, les ergots 77 sont, dans cet exemple, au nombre de quatre et sont régulièrement répartis sur le pourtour de l'auge 16. L'auge 16 est fixée sur la partie proéminente 7 du boîtier, et par conséquent elle est immobile par rapport à la deuxième partie du boîtier formée par la plate-forme 4.

L'auge 16 présente un diamètre extérieur, en dehors des ergots 77, qui est légèrement inférieur au diamètre intérieur de la bague 20, et les ergots 77 présentent une largeur circonférentielle inférieure aux ouvertures des guides en "L" 71, de sorte que le premier élément, de verrouillage formé par la bague 20 peut être engagé sur le deuxième élément de verrouillage formé par l'auge 16, lors du basculement du couvercle 3 en position abaissée. Lorsque le couvercle 3 est ainsi abaissé avec un porte-filtre 15 en position dans la chambre d'infusion 11, la collerette 26. du porte-filtre est serrée entre le pourtour supérieur 18 de l'auge 16 et le joint d'étanchéité 30 en appui contre le rebord 22 de la bague 20. Le verrouillage de la chambre d'infusion 11 est ensuite obtenu en déplaçant la commande de verrouillage 42 de la position déverrouillée représentée à la figure 6 à la position verrouillée représentée à la figure 5. Les ergots 77 sont alors engagés dans la deuxième portion des guides en "L" 71 grâce à la rotation de la bague 20 provoquée par le levier de verrouillage 50.

Dans la position verrouillée représentée notamment à la figure 3, les ergots 77 viennent en appui par leur face inférieure sur le bord supérieur des pattes 74. La coopération de ces surfaces de contact entre les ergots 77 et les guides 71 interdit tout mouvement vers le haut de la bague 20. Les surfaces de contact de la bague, formées par le bord supérieur de chacune des pattes 74, s'étend globalement dans un plan perpendiculaire à l'axe de verrouillage V1, de sorte que l'augmentation de la pression dans la première chambre d'infusion 11 ne risque pas d'entraîner un glissement entre les surfaces de contact par rotation de la bague 20 vers la position déverrouillée. Toutefois, il est envisageable de réaliser les pattes 74 sous forme de rampes inclinées afin d'augmenter le serrage entre l'auge 16 et la bague 20 lors du verrouillage.

Dans le but de réduire encore les risques de déverrouillage sous l'effet de la pression, la surface de contact formée par le bord supérieur d'une patte 74 de la bague 20, présente un bossage 75, tandis que la surface de contact formée par la face inférieure d'un ergot 77 présente un creux 78. Les bossages 75 et les creux 78 sont agencés sur les surfaces de contact correspondantes de manière à venir en correspondance lorsque la bague 20 est en position verrouillée par rapport à l'auge 16. La coopération de ces creux 78 et de ces bossages 75 fait que le couple à exercer sur la bague 20 pour quitter la position verrouillée est d'autant plus important que la pression est grande dans la chambre d'infusion.

La deuxième chambre d'infusion 12 comporte également une bague 20 et une auge 16 qui sont rigoureusement identiques à celles décrites précédemment en relation avec la première chambre d'infusion. La bague 20 de cette deuxième chambre 12 comporte également un pion d'entraînement 62 qui coopère avec le deuxième bras d'entraînement 56 du levier 50, d'une manière tout à fait analogue au premier bras d'entraînement 55. Ainsi, la bague 20 et l'auge 16 de la deuxième chambre d'infusion 12 forment un premier élément et un deuxième élément de verrouillage mobiles en rotation par rapport à un deuxième axe de verrouillage V2, d'une manière tout à fait analogue aux mêmes éléments de verrouillage de la première chambre d'infusion 11.

On notera que l'axe de pivotement 51 et les premier et deuxième axes de verrouillage (V1, V2) sont parallèles et alignés sur une même droite, comme on peut le voir aux figures 5 et 6. De plus, l'axe de pivotement 51 coupe le segment reliant les premier et deuxième axes de verrouillage (V1, V2) au milieu de celui-ci. Les premier et deuxième bras d'entraînement (55, 56) du levier 50 sont symétriques par rapport à l'axe de pivotement 51 de celui-ci. On obtient ainsi une rotation simultanée de même sens et de même amplitude des deux bagues 20 associées respectivement aux deux chambres d'infusion (11, 12) lors du pivotement du levier de verrouillage 50.

On notera également que la position des premier et deuxième bras d'entraînement (55, 56) est symétrique par rapport au segment reliant les axes de verrouillage (V1, V2), ou encore par rapport au plan comprenant les axes (V1, V2), entre la position verrouillée représentée à la figure 5 et la position déverrouillée représentée à la figure 6. Cette disposition permet de conserver une longueur effective 1 de chacun des bras d'entraînement (55, 56) la plus importante possible au cours du pivotement du levier de verrouillage 50 entre les positions verrouillée et déverrouillée. On notera également que la longueur effective 1 de chaque bras d'entraînement (55 ; 56) est identique en position verrouillée et déverrouillée, permettant ainsi d'exercer le même couple à transmettre aux bagues 20 pour quitter l'une ou l'autre de ces positions.

Comme on peut le voir aux figures 5 et 6, le bras de commande 52 du levier 50 ne forme pas un angle droit avec les bras d'entraînement (55, 56) dudit levier, bien que la glissière 45 guidant le mouvement de la commande de déverrouillage 42 soit parallèle au segment reliant les axes de verrouillage (V1, V2). En effet, le bras de commande 52 du levier 50 est décalé d'environ une dizaine de degrés par rapport à la perpendiculaire aux bras d'entraînement (55, 56). Cet angle de décalage est déterminé de manière à ce que le bouton de commande 43 soit situé en position verrouillée au milieu de la face avant du couvercle 3, et franchement décalé vers la gauche en position déverrouillée, comme on peut le constater aux figures 1 et 2. Le déplacement du bouton de commande 43 entre une position centrale et une position nettement excentrée permet à l'utilisateur d'identifier plus intuitivement les positions verrouillée et déverrouillée de la commande 42.

Lorsque l'utilisateur veut préparer une infusion, il place un ou deux porte-filtre 15 contenant une dosette dans la ou les chambres d'infusion (11, 12), puis il abaisse le couvercle 3 d'une main. Les bagues 20 des première et deuxième chambres d'infusion (11, 12) s'engagent naturellement sur les auges 16 correspondantes du fait du mouvement en arc de cercle du couvercle 3 guidé par les charnières 5 vers la partie proéminente 7 de la plate-forme 4. Les ergots 77 des auges 16 pénètrent lors dans la première portion des guides 71 des bagues 20. L'utilisateur déplace ensuite le bouton de commande 43 vers la droite, par exemple avec le pouce de l'autre main, pour faire passer le bouton de la position déverrouillée représentée à la figure 6, à la position verrouillée représentée à la figure 5. Le déplacement de la commande de verrouillage 42 entraîne par l'intermédiaire du levier de verrouillage 50 une rotation anti-horaire simultanée des deux bagues 20 associées respectivement aux première et deuxième chambres d'infusion (11, 12). Les surfaces de contact des ergots 77 des auges 16 viennent eh prise avec les surfaces de contact des pattes 74 des bagues 20. Tout mouvement de dégagement des bagues 20 selon leurs axes de verrouillage respectifs (V1, V2) est alors impossible.

Une fois l'infusion préparée, l'utilisateur déplace le bouton de commande 43 vers la gauche pour le faire passer de la position verrouillée (figure 5) à la position déverrouillée (figure 6). Au cours de ce déplacement du bouton 43, le levier de verrouillage 50 provoque une rotation horaire simultanée des deux bagues 20 associées respectivement aux deux chambres d'infusion (11, 12) ; cette rotation des bagues 20 provoque le dégagement des pattes 74 des bagues 20 relativement aux ergots 77 des auges 16. Le couvercle 3 pivote dès lors vers le haut en position ouverte, et ce de préférence automatiquement grâce à des éléments de rappel élastiques agencés dans les charnières 5 formant l'articulation entre le couvercle 3 et la plate-forme 4. Le ou les porte-filtres 15 placés dans les chambres d'infusion (11, 12) peuvent être alors saisis par leur poignée 27 pour jeter la dosette usagée.

Bien entendu, le mode de réalisation décrit ci-dessus n'est nullement limitatif, de nombreuses modifications pouvant être apportées sans sortir du cadre de la présente invention. Parmi celles-ci, on peut citer notamment la possibilité de ne prévoir qu'une seule chambre d'infusion, le fait de prévoir un couvercle détachable par rapport à la plate-forme et non pas articulé, le fait de ne prévoir qu'un seul premier élément de verrouillage et un seul deuxième élément de verrouillage pour verrouiller une pluralité de chambres d'infusion, ou encore la possibilité de réaliser ces éléments de verrouillage sous forme de pièces distinctes des pièces délimitant les chambres d'infusion et, par exemple, situées entre celles-ci. D'autres modifications peuvent encore être apportées, et notamment inverser la position des ergots des guides en "L" par rapport aux premier et deuxième éléments de verrouillage, ou agencer le premier élément de verrouillage rotatif sur la partie du boîtier formant la plate-forme, le deuxième élément de verrouillage étant fixé sur une partie mobile du boîtier qui se présente sous forme d'un couvercle, tiroir ou autre.

## Revendications

1. Machine pour préparer une infusion comportant :
- un boîtier (2) comprenant au moins une première partie (3) et une deuxième partie (4) mobiles l'une par rapport à l'autre ;
- un générateur d'eau chaude sous pression agencé à l'intérieur du boîtier ;
- au moins une première chambre d'infusion (11) délimitée par les première et deuxième parties (3, 4) du boîtier, et alimentée par ledit générateur pour infuser un produit placé à l'intérieur; et
- un dispositif de verrouillage (40) de la chambre d'infusion (11) comprenant une commande de verrouillage (42) reliée à un levier de verrouillage (50) et comprenant au moins un premier élément de verrouillage (20) monté rotatif sur un axe (V1), dit de verrouillage, relié à la première partie (3) du boîtier et un deuxième élément de verrouillage (16) fixé à la deuxième partie (4) du boîtier, ledit premier élément de verrouillage (20) étant adapté à être déplacé par rotation entre une position verrouillée dans laquelle lesdits premier (20) et deuxième (16) éléments de verrouillage sont en prise l'un avec l'autre, et une position déverrouillée dans laquelle lesdits premier (20) et deuxième (16) éléments de verrouillage sont désengageables l'un de l'autre,
**caractérisé en ce que** le levier de verrouillage (50) est monté pivotant autour d'un axe (51) fixe par rapport à la première partie (3) du boîtier et est relié au premier élément de verrouillage (20), et ledit levier de verrouillage (50) est adapté à entraîner ledit premier élément de verrouillage (20) en rotation autour de l'axe de verrouillage (V1) par rapport à la première partie (3) du boîtier et à exercer sur ledit premier élément de verrouillage (20) un couple amplifié par rapport au couple exercé sur ledit levier (50) par la commande de verrouillage (42).

2. Machine selon la revendication 1, dans laquelle le levier de verrouillage (50) comprend un bras de commande (52) s'étendant depuis l'axe de pivotement (51) jusqu'à une portion (53) reliée à la commande de verrouillage (42), et un premier bras d'entraînement (55) s'étendant depuis ledit axe de pivotement (51) jusqu'à une portion (57) qui est reliée au premier élément de verrouillage (20) en un point excentré par rapport à l'axe de verrouillage (V1) dudit premier élément (20), la longueur (L) du bras de commande (52) étant supérieure à la longueur (l) du bras d'entraînement (55).

3. Machine selon la revendication 1 ou 2, dans laquelle l'un (16) desdits premier et deuxième éléments de verrouillage comprend des ergots (77) s'étendant radialement par rapport à l'axe de verrouillage (V1), tandis que l'autre (20) desdits premier et deuxième éléments de verrouillage comprend des guides en "L" (71) formés dans une bague (20) coaxiale à l'axe de verrouillage (V1), lesdits guides (71) présentant chacun une première portion longitudinale débouchant du côté de l'élément de verrouillage (16) muni d'ergots, suivie d'une deuxième portion circonférentielle dans laquelle l'ergot correspondant (77) vient en prise avec le guide (71).

4. Machine selon la revendication 3, dans laquelle les guides (71) et les ergots (77) présentent des surfaces de contact mutuel présentant respectivement un bossage (75) et un creux (78) venant en correspondance lorsque les premier et deuxième éléments de verrouillage (20, 16) sont en position verrouillée.

5. Machine selon l'une quelconque des revendications précédentes, dans laquelle le levier de verrouillage (50) présente un bras d'indexage (59) s'étendant depuis l'axe de pivotement (51) jusqu'à une butée d'indexation (60) en appui contre un organe élastiquement déformable (63) relié à la première partie (3) du boîtier, le pivotement du levier (50) depuis la position verrouillée ou déverrouillée entraînant une déformation de l'organe élastique (63) à l'encontre de sa force de rappel.

6. Machine selon l'une quelconque des revendications précédentes, dans laquelle la première partie (3) du boîtier présente un guide (45) le long duquel la commande.de verrouillage (42) est mobile en translation, ladite commande de verrouillage (42) étant reliée de manière articulée au levier de verrouillage (50).

7. Machine selon l'une quelconque des revendications précédentes, dans laquelle une deuxième chambre d'infusion (12) est prévue, et dans laquelle le levier de verrouillage (50) est en outre relié à un premier élément de verrouillage (20) de la deuxième chambre (12), ledit levier (50) étant adapté à entraîner simultanément en rotation les premiers éléments de verrouillage respectifs (20) des première (11) et deuxième (12) chambres autour de leurs axes de verrouillage respectifs (V1, V2), par rapport à la première partie (3) du boîtier.

8. Machine selon les revendications 2 et 7, dans laquelle le levier de verrouillage (50) comprend un deuxième bras d'entraînement (56) qui est relié au premier élément de verrouillage (20) de la deuxième chambre d'infusion (12), et qui s'étend depuis l'axe de pivotement (51) selon une direction colinéaire au premier bras d'entraînement (55), de préférence sur une même longueur, l'axe de pivotement (51) du levier étant parallèle aux axes de verrouillage (V1, V2) des premier et deuxième éléments de verrouillage respectifs (20) des première (11) et deuxième (12) chambres d'infusion et étant situé approximativement au milieu desdits axes de verrouillage (V1, V2).

9. Machine selon la revendication 8, dans laquelle l'angle formé entre les premier et deuxième bras d'entraînement (55, 56) du levier (50) d'une part, et le bras de commande (52) dudit levier (50) d'autre part, est déterminé en fonction des positions verrouillée et déverrouillée de la commande de verrouillage (42) de manière à ce que lesdits premier et deuxième bras d'entraînement (55, 56) soient dans des positions approximativement symétriques, par rapport au plan comprenant les axes de verrouillage (V1, V2), entre la position verrouillée et la position déverrouillée de ladite commande de verrouillage (42).

10. Machine selon l'une quelconque des revendications précédentes, dans laquelle la deuxième partie du boîtier constitue une plate-forme (4) montée en façade du boîtier et la première partie du boîtier constitue un couvercle supérieur (3) monté articulé sur ladite plate-forme (4).

## Claims

1. Machine for preparing an infusion, comprising:
- a housing (2) comprising at least one first part (3) and one second part (4) able to move with respect to each other;
- a pressurised hot water generator arranged inside the housing;
- at least one first infusion chamber (11) delimited by the first and second parts (3, 4) of the housing and fed by the said generator in order to infuse a product placed inside; and
- a device (40) for locking the infusion chamber (11) comprising a locking control (42) connected to a locking lever (50) and comprising at least one first locking element (20) rotatably mounted on an axis (V1), referred to as the locking axis, connected to the first part (3) of the housing, and a second locking element (16) fixed to the second part (4) of the housing, the said first locking element (20) being adapted to be moved by rotation between a locked position in which the said first (20) and second (16) locking elements are in engagement with each other, and an unlocked position in which the said first (20) and second (16) locking elements are disengageable from each other,
**characterised in that** the locking lever (50) is mounted so as to pivot about a spindle (51) fixed with respect to the first part (3) of the housing and is connected to the first locking element (20), and the said locking lever (50) is adapted to drive the said first locking element (20) in rotation about the locking axis (V1) with respect to the first part (3) of the housing and to exert on the said first locking element (20) a torque amplified with respect to the torque exerted on the said lever (50) by the locking control (42).

2. Machine according to claim 1, in which the locking lever (50) comprises a control arm (52) extending from the pivot spindle (51) as far as a portion (53) connected to the locking control (42), and a first drive arm (55) extending from the said pivot spindle (51) as far as a portion (57) that is connected to the first locking element (20) at a point off-centre with respect to the locking axis (V1) of the said first element (20), the length (L) of the control arm (52) being greater than the length (l) of the drive arm (55).

3. Machine according to claim 1 or 2, in which one (16) of the said first and second locking elements comprises lugs (77) extending radially respect to the locking axis (V1), while the other one (20) of the said first and second locking elements comprises L-shaped guides (71) formed in a ring (20) coaxial with the locking axis (V1), the said guides (71) each having a first longitudinal portion emerging on the side of the locking element (16) provided with lugs, followed by a second circumferential portion in which the corresponding lug (77) comes into engagement with the guide (71).

4. Machine according to claim 3, in which the guides (71) and the lugs (77) have mutual contact surfaces having respectively a protrusion (75) and a hollow (78) coming into correspondence when the first and second locking elements (20, 16) are in the locked position.

5. Machine according to any one of the preceding claims, in which the locking lever (50) has a location arm (59) extending from the pivot spindle (51) as far as a location stop (60) in abutment against an elastically deformable member (63) connected to the first part (3) of the housing, the pivoting of the lever (50) from the locked or unlocked position causing a deformation of the elastic member (63) counter to its return force.

6. Machine according to any one of the preceding claims, in which the first part (3) of the housing has a guide (45) along which the locking control (42) is able to move in translation, the said locking control (42) being connected to the locking lever (50) in an articulated manner.

7. Machine according to any one of the preceding claims, in which a second infusion chamber (12) is provided and in which the locking lever (50) is also connected to a first locking element (20) of the second chamber (12), the said lever (50) being adapted to drive simultaneously in rotation the first respective locking elements (20) of the first (11) and second (12) chambers about their respective locking axes (V1, V2), with respect to the first part (3) of the housing.

8. Machine according to claims 2 and 7, in which the locking lever (50) comprises a second drive arm (56) that is connected to the first locking element (20) of the second infusion chamber (12) and that extends from the pivot spindle (51) in a direction co-linear with the first drive arm (55), preferably over the same length, the pivot spindle (51) of the lever being parallel to the locking axes (V1, V2) of the respective first and second locking elements (20) of the first (11) and second (12) infusion chambers and being situated approximately at the middle of the said locking axes (V1, V2).

9. Machine according to claim 8, in which the angle formed between the first and second drive arms (55, 56) of the lever (50) on the one hand and the control arm (52) of the said lever (50) on the other hand is determined according to the locked and unlocked positions of the locking control (42) so that the said first and second drive arms (55, 56) are in approximately symmetrical positions, with respect to the plane comprising the locking axes (V1, V2), between the locked position and the unlocked position of the said locking control (42).

10. Machine according to any one of the preceding claims, in which the second part of the housing constitutes a platform (4) mounted on the front face of the housing and the first part of the housing constitutes a top cover (3) mounted articulated on the said platform (4).

## Patentansprüche

1. Maschine zum Aufbereiten eines Aufgusses mit folgenden Merkmalen:
- ein Gehäuse (2), das wenigstens einen ersten Teil (3) und einen zweiten Teil (4) aufweist, welche relativ zueinander beweglich sind;
- ein Druck-Heißwassererzeuger, der in dem Gehäuse angeordnet ist;
- wenigstens eine erste Aufgusskammer (11), welche durch den ersten Teil und den zweiten Teil (3, 4) des Gehäuses begrenzt und durch den Erzeuger versorgt wird, um ein im Inneren angeordnetes Produkt aufzugießen; und
- eine Verriegelungsvorrichtung (40) der Infusionskammer (11) mit einem Verriegelungsantrieb (42), der mit einem Verriegelungshebel (50) verbunden ist und wenigstens ein erstes Verriegelungselement (20) umfasst, das auf einer ersten sogenannten Verriegelungsachse (V1), die mit dem ersten Teil (3) des Gehäuses verbunden ist, drehbar ist, und einem zweiten Verriegelungselement (16), das an dem zweiten Teil (4) des Gehäuses befestigt ist, wobei das erste Verriegelungselement (20) dazu eingerichtet ist, durch Drehung zwischen einer Verriegelungsposition, in der das erste (20) und das zweite (16) Verriegelungselement miteinander in Eingriff sind, und einer Entriegelungsposition, in der das erste (20) und das zweite (16) Verriegelungselement voneinander trennbar sind, verlagert zu werden,
**dadurch gekennzeichnet, dass** der Verriegelungshebel (50) um eine relativ zu dem ersten Teil (3) des Gehäuses feststehende Achse (51) schwenkbar montiert und mit dem ersten Verriegelungselement (20) verbunden ist und der Verriegelungshebel (50) dazu eingerichtet ist, das erste Verriegelungselement bei der Drehung um die Verriegelungsachse (V1) im Verhältnis zu dem ersten Teil (3) des Gehäuses mitzunehmen und auf das erste Verriegelungselement (20) ein Drehmoment auszuüben, das im Verhältnis zu dem von dem Verriegelungsantrieb (42) auf den Hebel (50) ausgeübten Drehmoment verstärkt ist.

2. Maschine nach Anspruch 1, wobei der Verriegelungshebel (50) einen Antriebsarm (52) aufweist, der sich von der Schwenkachse (51) bis zu einem mit dem Verriegelungsantrieb (42) verbundenen Teil (53) erstreckt, sowie einen ersten Mitnehmerarm (55), der sich von dieser Schwenkachse (51) bis zu einem mit dem ersten Verriegelungselement (20) verbundenen Teil bei einem im Verhältnis zu der Verriegelungsachse (V1) exzentrischen Punkt des ersten Elementes (20) erstreckt, wobei die Länge (L) des Antriebsarms (52) größer ist als die Länge (1) des Mitnehmerarms (55).

3. Maschine nach Anspruch 1 oder 2, wobei eines (16) der ersten und zweiten Verriegelungselemente Zapfen (77) aufweist, die sich relativ zur Verriegelungsachse (V1) radial erstrecken, während das andere (20) der ersten und zweiten Verriegelungselemente "L"-förmige Führungen (71) in einem zur Verriegelungsachse (V1) koaxialen Ring (20) aufweist, wobei die Führungen (71) jeweils einen ersten Längsteil aufweisen, der von der mit dem Zapfen versehenden Seite des Verriegelungselement (16) vorsteht, gefolgt von einem zweiten Umfangsteil, bei dem der entsprechende Zapfen (77) mit der Führung (71) in Eingriff kommt.

4. Maschine nach Anspruch 3, wobei die Führungen (71) und die Zapfen (77) gegenseitige Kontaktflächen aufweisen, die jeweils einen Dom (75) und eine Vertiefung (78) haben, welche in Deckung kommen, wenn das erste und das zweite Verriegelungselement (20, 16) in der Verriegelungsposition sind.

5. Maschine nach einem der vorangehenden Ansprüche, wobei der Verriegelungshebel (50) einen Indizierarm (59) aufweist, der sich von der Schwenkachse (51) bis zu einem Indizieranschlag (60) erstreckt, gegen den ein verformbares elastisches Element (63) zur Anlage kommt, welches mit dem ersten Teil (3) des Gehäuses verbunden ist, wobei das Schwenken des Hebels (50) aus der Verriegelungs- oder Entriegelungsposition eine Deformation des elastischen Elements (63) gegen dessen Rückstellkraft mit sich bringt.

6. Maschine nach einem der vorangehenden Ansprüche, wobei der erste Teil (3) des Gehäuses eine Führung (45) aufweist, entlang der der Verriegelungsantrieb (42) in Translationsrichtung bewegbar ist, wobei der Verriegelungsantrieb (42) mit dem Verriegelungshebel (50) gelenkig verbunden ist.

7. Maschine nach einem der vorangehenden Ansprüche, wobei eine zweite Aufgusskammer (12) vorgesehen ist und wobei der Verriegelungshebel (50) ferner mit einem ersten Verriegelungselement (20) der zweiten Kammer (12) verbunden ist, wobei der Hebel (50) dazu eingerichtet ist, jeweils die ersten Verriegelungselemente (20) der ersten (11) und der zweiten (12) Kammer durch Drehung um ihre jeweiligen Verriegelungsachsen (V1, V2) relativ zum ersten Teil (3) des Gehäuses gleichzeitig mitzunehmen.

8. Maschine nach den Ansprüchen 2 und 7, wobei der Verriegelungshebel (50) einen zweiten Mitnehmerarm (56) aufweist, der mit dem ersten Verriegelungselement (20) der zweiten Aufgusskammer (12) verbunden ist und der sich von der Schwenkachse (51) in Richtung einer zum ersten Mitnehmerarm (55) kolinearen Richtung erstreckt, vorzugsweise über dieselbe Länge, wobei die Schwenkachse (51) des Hebels parallel zu den Verriegelungsachsen (V1, V2) der ersten und zweiten Verriegelungselemente (20) der ersten (11) und der zweiten (12) Aufgusskammer ist und ungefähr in der Mitte dieser Verriegelungsachse (V1, V2) liegt.

9. Maschine nach Anspruch 8, wobei der zwischen dem ersten und dem zweiten Mitnehmerarm (55, 56) des Hebels (50) einerseits und dem Antriebsarm (52) des Hebels (50) andererseits gebildete Winkel als Funktion der Verriegelungs- und Entriegelungspositionen des Verriegelungsantriebs (42) derart bestimmt wird, dass der erste und der zweite Mitnehmerarm (55, 56) relativ zu der die Verriegelungsachsen (V1, V2) enthaltenden Ebene zwischen der Verriegelungsposition und der Entriegelungsposition des Verriegelungsantriebs (42) in ungefähr symmetrischen Positionen liegen.

10. Maschine nach einem der vorangehenden Ansprüche, wobei der zweite Teil des Gehäuses eine Plattform (40) bildet, die an der Außenseite des Gehäuses montiert ist, und der erste Teil des Gehäuses eine obere Abdeckung (3) bildet, die an der Plattform (4) gelenkig montiert ist.
